# EUROPEAN PATENT APPLICATION

(11) **EP 4 449 883 A1**
(43) Date of publication of application: **23.10.2024**
(21) Application number: 24170784.3
(22) Date of filing: 17.04.2024
(51) Int. Cl.: A23L 11/00, A23G 3/34, A23G 3/42, A23G 3/48

(54) **SUBSTITUTE MARZIPAN AND PREMIX THEREFOR**

(30) Priority: 19.04.2023 NL 2034635
(71) Applicant: Sonneveld Group B.V., 3356 LJ Papendrecht (NL)
(72) Inventor: BAKKER, Marcel, 3356LJ PAPENDRECHT (NL)
(74) Representative: EP&C

(57) **Abstract**

The present invention relates to use of pre-gelled pulse powder having a fat content below 10 wt.% relative to total weight of the pulse powder, for preparing marzipan substitute or premix therefor, wherein said marzipan substitute or premix therefor comprises the pre-gelled pulse powder, sweetening agent, hydrocolloid and optionally water. Accordingly, the present invention also relates to marzipan substitute or premix therefor, comprising pre-gelled pulse powder having a fat content below 10 wt.% relative to total weight of the pulse powder, sweetening agent, and optionally water.

## Description

### Technical field

The present invention relates to a substitute marzipan and premix therefor.

### Background of the invention

Marzipan and its substitutes are widely used in confectionery for coating, filling and decorative purposes, in a plastic extrudable condition in which it may be piped or sheeted in use. Marzipan is traditionally prepared by mixing ground almonds with sugar.

Imitation marzipan is often used as a substitute for real marzipan, because it is cheaper. Imitation marzipan is designed to look and taste like real marzipan, but is made from less expensive ingredients.

US4880644A for example discloses a method for preparing imitation marzipan by using soy beans, which are cheap in comparison to nuts such as almonds, and easily available. The method of US4880644A comprises soaking dehulled soy beans in hot water, cooling and dehydrating the soy beans, adding sugar and a fat ingredient, mixing and grinding the mixture, and subjecting the resulting mixture to heat treatment and cooling.

As an alternative, US4278700A discloses a premix for preparing imitation marzipan. The premix comprises soy bean meal, sugar and fat and can be mixed with water to form the end product.

However, the prior art imitation marzipan is generally considered to be of lower quality than real marzipan, as it lacks the consistency, cohesiveness, and the elasticity that comes from using real almonds in the recipe. In addition, its properties change over time which limits its shelf life, and some people may be allergic to the ingredients used in imitation marzipan, particularly those with allergies to soy bean. Also, the prior art preparation methods have several other drawbacks, such as the high energy required in the process.

Therefore, there remains a need to develop a new or improved imitation marzipan and production method therefor. It is an objective of the present invention to overcome at least one of the above-mentioned or other problems in the prior art.

### Summary of the invention

The present inventor has developed a dry premix for preparing imitation marzipan (marzipan substitute). The premix comprises *pre-gelled* pulse powder which can be mixed with water on site, i.e. at local bakeries. By supplying a mixture of dry ingredients instead of a ready-made marzipan substitute, bakeries always have access to fresh marzipan substitute with a constant quality and good processing properties. Accordingly, the present disclosure brings important advantages in terms of production and transportation costs compared to the traditional preparation method for marzipan substitute. The dry premix also allows for easier mixing with coloring and/or flavoring agents. Moreover, the obtained product has a constant quality, good processing properties, an improved stability and thus longer shelf life. In particular, it was found, based on the comparison of pre-gelled and non-pre-gelled pulse powder, that the use of pre-gelled pulse powder leads to improved firmness, cohesiveness and elasticity, and reduced stickiness of the obtained marzipan substitute. The improvement is even more pronounced if pre-gelled pulse powder is used with a fat content of below 10 wt.% and most preferred is pre-gelled navy bean (*Phaseolus vulgaris var. vulgaris*) powder.

### Detailed description of the invention

The present disclosure relates to the use of pulse powder (or pulse meal/flour) for preparing marzipan substitute or premix therefor, wherein said marzipan substitute or premix therefor comprises the pulse powder, sweetening agent (preferably powdered sugar) and optionally water. Accordingly, said preparing typically involves mixing the pre-gelled pulse powder with sweetening agent and optionally water. In an aspect, the pulse powder is pre-gelled or pre-heated. In this respect, the term "pre" in "pre-gelled" or "pre-heated" relates to gelling or heating the pulse powder before preparing the marzipan substitute or premix therefor, such as before mixing the pre-gelled or pre-heated pulse powder with other ingredients of the end product. The term "pre-gelled starch" can herein be used interchangeably with the term "pre-gelatinized starch".

The pulse powder is preferably pre-gelled by heating the pulse powder, e.g. to a temperature of 80-250, degrees Celsius, preferably between 105-200 degrees Celsius, more preferably between 110-140 degrees Celsius. The heating step also helps in reducing any undesired bitter taste of the pulse powder and/or in reducing anti nutritional factors such as trypsin inhibitors, non-starch polysaccharides (NSP) enzymes, and/or phytase (these inhibit digestibility). The pre-heating step is preferably performed for 5 min - 4 h, or 10 min - 2 h, or 30 min - 1 h. In the context of the present disclosure, the term "pre-gelled pulse powder" can refer to pulse powder comprising at least 10, 20, 30, 40, 50, 75, 80, 85, 90, 95 wt.% gelatinized starch, relative to the total weight of starch in the pulse powder. In addition or alternatively, the pre-gelled pulse powder may comprise at least 10, 20, 30, 40, 50, 75, 80, 85, 90, 95 wt.% gelatinized starch, relative to the total weight of the pulse powder.

The percentage of starch gelatinization in pulse powder can be determined for example by using differential scanning calorimetry (DSC) analysis. For this, a representative sample of pulse powder is weighed and placed in a DSC sample pan. The sample may then be heated at a constant rate, typically between 2-10 °C/min, while the heat flow is measured. The endothermic peak associated with the gelatinization of starch is recorded. The enthalpy of the peak can also be calculated by integrating the peak area.

The total starch content of the powder can be determined using a standard method, such as the AOAC method (e.g., AOAC 996.11). This method involves treating the sample with alpha-amylase and amyloglucosidase to hydrolyze the starch into glucose, which is then quantified using a spectrophotometric method. Then the percentage of gelatinized starch can be calculated: % Gelatinized starch = (enthalpy of gelatinization / enthalpy of total starch) x 100 where the enthalpy of gelatinization is the heat absorbed during the endothermic peak, and the enthalpy of total starch is the heat absorbed by the total starch content of the powder.

Preferably, the pulse powder as used in the present disclosure, i.e. powdered pulse, has a water content of below 20, 19, 18, 17, 16, 15, 14, 13, 12, 11, 10 wt.% water, relative to total weight of the pulse powder.

In addition or alternatively, the pulse powder has a fat content of below 20, 19, 18, 17, 16, 15, 14, 13, 12, 11, 10, 9, 8, 7, 6, 5, 4 ,3, 2 wt.% , relative to total weight of the pulse powder. It was found that the use of low fat pulse powder leads to much better elasticity of the marzipan substitute obtained therewith.

It may be advantageous in the context of the current invention if the pulse powder has a relatively low protein content, such as no more 35 wt.%, preferably no more than 30 wt.%, more preferably no more than 25 wt.%, most preferably no more than 20 wt.%, relative to total weight of the pulse powder. A preferred protein content of the pulse is 15-30%, preferably 20-25%, relative to total weight of the pulse powder. In addition or alternatively, in the context of the current invention, the pulse powder may have a relatively high carbohydrate content, such as at least 40 wt.%, preferably at least 50 wt. % more preferably at least 60 wt.%, relative to total weight of the pulse powder. A preferred carbohydrate content of the pulse powder is 50-80 wt.%, preferably 60-70 wt.%, relative to total weight of the pulse powder.

Accordingly, the present disclosure also provides for the use of the pre-gelled and/or pre-heated pulse powder for
- increasing consistency and/or cohesiveness of marzipan substitute;
- for increasing elasticity of marzipan substitute;
- for reducing stickiness of marzipan substitute;
- for reducing bitterness and/or beany flavour of marzipan substitute; and/or
- for increasing shelf life of marzipan substitute,

all preferably relative to the use of not-pre-gelled and/or not-preheated pulse powder (particularly relative to not pre-gelled navy bean (*Phaseolus vulgaris var. vulgaris*) powder and/or relative to not using xanthan gum/alginate),
wherein said marzipan substitute comprises the pre-gelled and/or pre-heated pulse powder, sweetening agent and water.

The term marzipan substitute as used herein may refer to any product of ingredient that may be used in place of traditional marzipan (marsipan, mazapán, Mazapan, marzapán, marzapan, marchpane). The term encompasses or may be replaced by confectionary mass, pastry, substitute almond paste. As will be clear, the term "substitute" is interchangeable with terms like imitation, replacer, or alternative. In addition or alternatively, the marzipan substitute or premix therefor in the context of the current disclosure may encompass any confectionary mass or premix therefor comprising an almond flavour (alternative). The almond flavour (alternative) can be any ingredient which provides or resembles an almond flavour, with or without using actual almonds. The almond flavour ingredient may include one or more selected from the group consisting of a fruit seed (e.g. apple seed, quince seed) or an extract thereof, a fruit kernel (e.g. apricot kernels) or an extract thereof, a fruit pit (e.g. cherry pit, plum, pit, peach pit) or an extract thereof, amaretto liqueur, almond extract, almond oil, artificial almond flavouring (e.g. benzaldehyde, benzyl acetate and/or amyl benzoate), hazelnut or hazelnut extract, pistachio or pistachio extract, vanillin, coumarin, and ethylvanillin.

The consistency of a marzipan substitute refers to its physical texture and properties, such as its firmness. Cohesiveness of a marzipan substitute may refer to the ability of the marzipan substitute to hold together and maintain its shape when manipulated or cut. For example, a sample of the marzipan substitute is compressed between two plates or probes, consistency (i.e. firmness) of the substitute can be determined by the maximum force required to compress it, while the cohesiveness can be evaluated by analyzing the shape of the compression curve and the force required to break the sample. The elasticity of a marzipan substitute refers to its ability to being stretched before breaking. It can be evaluated by measuring the degree of stretching at which the substitute breaks. Alternatively, the elasticity of the marzipan substitute can be determined by the percentage of deformation and the speed at which it returns to its original shape. The stickiness of a marzipan substitute refers to the degree to which the substitute adheres or clings to other surfaces, such as hands, work surfaces, or molds. It can be evaluated by measuring the force required to separate the substitute from the surface to which it is stuck. For example, a sample is compressed between two plates or probes, and the force required to separate the sample from the plates or probes is measured. The stickiness of the substitute is determined by the force required to separate it. Bitterness and/or beany flavour can be determined by sensory analysis by (trained) panellists. For example, 10 panellists taste the marzipan substitute and rate its bitterness/beany flavour on a scale of 1 to 10, where 1 is not bitter/beany at all and 10 is extremely bitter/beany. Shelf life of marzipan substitute can be determined by measuring the time to first visual cracks in a sample under storage conditions.

The marzipan substitute or marzipan substitute premix as described herein may comprise:
- the pulse powder as disclosed herein, preferably pre-gelled pulse powder;
- sweetening agent, such as sugar, preferably powdered sugar;
- fatty acid, vegetable oil, glycerol, or a combination thereof;
- a binder preferably a cold-set binder, a hydrocolloid, or a combination thereof;
- almond aroma, apricot kernel, or a combination thereof;
   and/or
- optionally one or more antioxidants.

The premix may be a dry premix, e.g. may comprise no (added) water or may comprise water in an amount of no more than 20, 15, 10, 5, 1 wt.%, relative to the total weight of the premix. The term "dry premix" thus encompasses premixes comprising oil and/or fat, such as vegetable oil. The "dry premix" is not limited to free-flowing powders (e.g. when comprising oil and/or fat component). In an embodiment, the marzipan substitute or premix thereof comprises an oil, more preferably in an amount of 1 - 25 wt.%, or 2 - 20 wt.%, or 5-15 wt.%, or 7.5 - 10 wt.%, relative to total weigh of the marzipan substitute or the premix therefor. In an embodiment, the oil is a vegetable oil. In an embodiment, the oil is one or more selected from the group consisting of sunflower oil, palm oil, soybean oil, rapeseed oil, coconut oil and olive oil.

The sweetening agent may be in any form, for example (powdered) sugar, inverted sugar, glucose, lactose, sucralose, Acesulfame K, stevia, and/or other sweetening agent. The sweetening agent, preferably powdered sugar, provides for a sweet taste, and may reduce water activity. Water activity (aw) is a measure of the amount of water available for microbial growth and chemical reactions in the marzipan substitute (premix). When the Aw of a food product is reduced, it can help to increase its shelf life and stability by inhibiting the growth of microorganisms, such as bacteria and fungi, that can spoil the food or make it unsafe to eat. Aw is defined as the ratio of the vapor pressure of water in the marzipan substitute (premix) to the vapor pressure of pure water at the same temperature and pressure. Preferably, the water hydration capacity of the marzipan is at least 0.5 /g db.

The choice of sweetening agent used in marzipan substitute can have an impact on taste, texture, and shelf life of the final product. The most commonly used sweetening agent in marzipan substitute is sugar. Sugar helps to give marzipan substitute its characteristic sweetness and can also help to bind the other ingredients together. A sweetening agent such as sugars also gives plasticity to the product. Using different types of sugar, such as powdered sugar or granulated sugar, can impact the texture of the marzipan. Inverted sugar is a mixture of glucose and fructose that is commonly used in confectionery. It has a higher level of sweetness than regular sugar and can help to prevent crystallization in the marzipan. Glucose and dextrose are both simple sugars that can be used as sweetening agent in marzipan substitute. These sugars can be used in conjunction with other sweetening agents to create a smoother texture in the marzipan substitute. Saccharin and acesulfame K are both artificial sweeteners that can be used in marzipan substitute. These sweeteners are much sweeter than sugar and can be used in smaller quantities to achieve the desired level of sweetness. Lactose is a sugar that is derived from milk. It is less sweet than regular sugar and can be used as a partial substitute for sugar in marzipan. Lactose can impact the texture of the marzipan substitute, making it slightly softer. Sucralose can provide sweetness without adding calories. It can also help to reduce the sugar content of the product, making it suitable for people who need to limit their sugar intake, such as those with diabetes. Stevia is a natural sweetener that is derived from the leaves of the stevia plant. It is much sweeter than sugar and can also be used in smaller quantities to achieve the desired level of sweetness. Stevia can also impact the texture of the marzipan substitute, making it slightly softer. Next to sugar, inulin, oligo fructose, poly dextrose and dissolvable fibres can be added, or a combination of them.

In the present disclosure there is a preference to use powdered sugar as the sweetening agent, in order to provide better taste and texture, and to reduce water activity of the marzipan substitute or premix therefor. The average particle size of the powdered sugar preferably is between 2-20 micron, preferably between 5-10 microns.

In addition or alternatively, the marzipan substitute or premix therefor as disclosed herein preferably does not comprise dextrose, or at most 0.1, 0.5, 1, 2, 3, 4, 5 wt.%, relative to the total weight of the marzipan substitute, or at most 0.1, 0.5, 1, 2, 3, 4, 5 wt.%, relative to the total weight of the marzipan substitute premix, respectively.

A fatty acid, vegetable oil (for example sunflower oil or preferably rapeseed oil), glycerol, or a combination thereof may be added to increase tenderness. An emulsifier may further be added to improve processibility of the marzipan substitute.

The binder preferably is a (cold-set) binder, a hydrocolloid, or a combination thereof may be added to improve moisture balance in the marzipan substitute. A cold-set binder can be used to bind and stabilize the marzipan substitute. A cold-set binder does not require heat to set or cure. The cold-set binder may be from potato, maize, corn, tapioca, and/or may be modified. In particular the addition of a hydrocolloid may improve moisture balance and other properties of the marzipan substitute such as consistence, cohesiveness, and elasticity. The hydrocolloid may be for example alginate, carboxymethyl cellulose (CMC), Taragum, carrageenan, locust bean gum, guar gum and xanthan gum. Particularly preferred is xanthan gum. The almond aroma, apricot kernel, or a combination thereof may provide the marzipan substitute of a marzipan taste, but this is not essential.

The starch in the pulse powder together with the hydrocolloids and the added water contribute to a good cohesiveness of the marzipan substitute, and ensures that the marzipan rolls out well and tears less easily.

As said, the marzipan substitute premix preferably is in dry form and/or comprises at most 20, 15, 10, 5, 1 wt.% water relative to the total weight of the marzipan substitute premix. The premix may be prepared by mixing the (dry) ingredients including the pulse powder, for example in a Nauta^{®} mixer in 900 seconds. During the mixing, vegetable oil and (almond) aroma can be added, for example by means of a pressurized vessel through a spray nozzle. The mixture may vary according to desired characteristics. Water can later be added to the premix in order to obtain the marzipan substitute.

The marzipan substitute premix as disclosed herein may comprise 5-90, preferably 5-40, more preferably 10-20 wt.% pre-gelled pulse powder (preferably having a fat content below 10 wt.% relative to total weight of the pulse powder); 1-90 wt.% sweetening agent (preferably 40-85 wt.%); optionally a (cold set) binder and/or hydrocolloid (such as xanthan gum/alginate), either in an amount of 0.1-5 wt.% preferably 0.5-5 wt.%; and optionally 1-25 wt.%, preferably 5-15 wt.% oil such as vegetable oil, relative to the total weight of the marzipan substitute premix.

As will be clear, the present disclosure also provides for marzipan substitute, for example comprising:
- pulse powder as disclosed herein, preferably pre-gelled pulse powder, preferably in an amount of 10-80 wt.%;
- sweetening agent, preferably powdered sugar, preferably in an amount of 20-80 wt.%;
- optionally (cold set) binder and/or hydrocolloid (such as xanthan gum/alginate), either in an amount of 0.1-5 wt.%, or 0.5-5 wt%;
- optionally 1-25 wt.%, preferably 5-15 wt.% oil such as vegetable oil; and
- water, preferably in an amount of 0-50, preferably 5-25 wt.%,
all relative to the total weight of the marzipan substitute.

Preferably, the marzipan substitute or premix therefor according to the present disclosure does not comprise (starch) syrup or at most 0.1, 0.5, 1, 2, 3, 4, 5 wt.% relative to the total weight of the marzipan substitute (premix).

Preferably, the marzipan substitute or premix therefor according to the present disclosure does not comprise anti-caking agent or at most 0.1, 0.5, 1, 2, 3, 4, 5 wt.% relative to the total weight of the marzipan substitute (premix). Examples of anti caking agents are sodium aluminosilicate, calcium silicate, sodium dioxide, powdered cellulose, magnesium stearate, sodium bicarbonate, sodium ferrocyanide, potassium ferrocyanide, tricalcium phosphate and yellow prussiate of soda.

Preferably, the marzipan substitute or premix therefor according to the present disclosure comprises at most 1, 2, 3, 4, 5, 6, 7, 8, 9, 10, 15, 20 wt% fat (e.g. fat from the pulse/bean). Preferably the marzipan substitute or premix therefor according to the present disclosure does not comprise other sources of fat other than from the pulse/bean (e.g. navy bean).

The present disclosure also provides for a method for obtaining marzipan substitute according to the present disclosure, comprising combining water and marzipan premix as herein, and subsequent mixing.

Accordingly, the marzipan substitute may comprise water, such as between 1-50, preferably 5-25 wt.% or more than 8, 9, 10, 11, 12, 13, 14, 15, 16, 17, 18, 19, 20, 21, 22, 23, 24, 25 wt.% water relative to the total weight of the marzipan substitute.

A preferred pulse in the present disclosure is one or more chosen from the group consisting of lentil (*Lens culinaris*), chickpea (*Cicer arietinum*), fava bean (*Vicia faba*), lima bean (*Phaseolus lunatus*), navy bean (*Phaseolus vulgaris*), kidney bean (*Phaseolus vulgaris*), black bean (*Phaseolus vulgaris*), pinto bean (*Phaseolus vulgaris*), great northern bean (*Phaseolus vulgaris*), red bean (*Phaseolus vulgaris*), cannellini bean (*Phaseolus vulgaris*), adzuki bean (*Vigna angularis*), mung bean (*Vigna radiata*), urad bean (*Vigna mungo*), cowpea (*Vigna unguiculata*), soybean (*Glycine max*), peanut (*Arachis hypogaea*), winged bean (*Psophocarpus tetragonolobus*), moth bean (*Vigna aconitifolia*), rice bean (*Vigna umbellata*), lima bean (*Phaseolus limensis*), scarlet runner bean (*Phaseolus coccineus*), hyacinth bean (*Lablab purpureus*), velvet bean (*Mucuna pruriens*), guar bean (*Cyamopsis tetragonoloba*), chickling vetch (*Lathyrus sativus*), lupin (*Lupinus spp*.), bamboo bean (*Phyllostachys edulis*), sword bean (*Canavalia gladiata*), jack bean (*Canavalia ensiformis*), horse gram (*Macrotyloma uniflorum*), lablab bean (*Lablab niger*), pigeon pea (*Cajanus cajan*), bambara groundnut (*Vigna subterranea*), velvet bean (*Mucuna pruriens var. utilis*), snow pea (*Pisum sativum var. saccharatum*), garden pea (*Pisum sativum*), broad bean (*Vicia faba var. major*), lima bean (*Phaseolus lunatus var. macrocarpus*), moth bean (*Vigna aconitifolia var. pubescens*), winged bean (*Psophocarpus tetragonolobus var. max*), mung bean (*Vigna radiata var. radiata*), soybean (*Glycine max var. max*), peanut (*Arachis hypogaea var. fastigiata*), red bean (*Phaseolus vulgaris var. vulgaris*), adzuki bean (*Vigna angularis var. angularis*), kidney bean (*Phaseolus vulgaris var. vulgaris*), pinto bean (*Phaseolus vulgaris var. vulgaris*), navy bean (*Phaseolus vulgaris var. vulgaris*) and linseed (*Linum usitatissimum*), or any combination thereof.

A pulse is a type of legume. A preferred pulse is a *Fabaceae* pulse. An important advantage of pulse powder is that it generally has a fine grind, preferably a pulse powder is used which has an average particle size of between 75-150 microns. This may improve the texture of the end product. In addition or alternatively, rice flour may be added to improve properties of the marzipan substitute (premix), e.g. in an amount of 1-25 wt.% relative to the weight of the marzipan substitute (premix).

In the context of the present disclosure, low fat pulse, such as pulse (or pulse powder) containing less than 20, 19, 18, 17, 16, 15, 14, 13, 12, 11, 10, 9, 8, 7, 6, 5, 4, 3, 2, 1 wt.% fat, relative to the total weight of the pulse (powder), is particularly preferred. Hence, the pulse is preferably one or more chosen from the group consisting of lentil (*Lens culinaris*), Chickpea (*Cicer arietinum*), Lima bean (*Phaseolus lunatus*), Navy bean (*Phaseolus vulgaris*), Kidney bean (*Phaseolus vulgaris*), Black bean (*Phaseolus vulgaris*), Pinto bean (*Phaseolus vulgaris*), Great northern bean (*Phaseolus vulgaris*), Red bean (*Phaseolus vulgaris*), Cannellini bean (*Phaseolus vulgaris*), Adzuki bean (*Vigna angularis*), Mung bean (*Vigna radiata*), Urad bean (*Vigna mungo*), Cowpea (*Vigna unguiculata*), Winged bean (*Psophocarpus tetragonolobus*), Moth bean (*Vigna aconitifolia*), Rice bean (*Vigna umbellata*), Scarlet runner bean (*Phaseolus coccineus*), Hyacinth bean (*Lablab purpureus*), Guar bean (*Cyamopsis tetragonoloba*), Chickling vetch (*Lathyrus sativus*), Bamboo bean (*Phyllostachys edulis*), Sword bean (*Canavalia gladiata*), Jack bean (*Canavalia ensiformis*), Horse gram (*Macrotyloma uniflorum*), Lablab bean (*Lablab niger*), Pigeon pea (*Cajanus cajan*), and Bambara groundnut (*Vigna subterranea*), or any combination thereof.

The use of low fat pulse powder in the present disclosure may provide for marzipan substitute with improved consistency, cohesiveness, and particular elasticity, as compared to not using low fat pulse powder.

In addition or alternatively, high carb or high starch pulse is preferred, such as pulse (or pulse powder) containing more than 20, 25, 30, 35, 40,45, 50, 55, 60, 65, 70, 75 wt.% starch (or carbohydrates) relative to the total weight of the pulse (powder). Accordingly, the pulse may preferably be one or more chosen from adzuki bean (*Vigna angularis*), black bean (*Phaseolus vulgaris*), broad bean (*Vicia faba* var. major), cannellini bean (*Phaseolus vulgaris*), chickpea (*Cicer arietinum*), cowpea (*Vigna unguiculata*), faba bean (*Vicia faba*), great northern bean (*Phaseolus vulgaris*), green pea (*Pisum sativum*), hyacinth bean (*Lablab purpureus*), jack bean (*Canavalia ensiformis*), kidney bean (*Phaseolus vulgaris*), lentil (*Lens culinaris*), lima bean (*Phaseolus lunatus*), moth bean (*Vigna aconitifolia*), mung bean (*Vigna radiata*), navy bean (*Phaseolus vulgaris*), pigeon pea (*Cajanus cajan*), pinto bean (*Phaseolus vulgaris*), red bean (*Phaseolus vulgaris*), rice bean (*Vigna umbellata*), scarlet runner bean (*Phaseolus coccineus*), snow pea (*Pisum sativum* var. saccharatum), sword bean (*Canavalia gladiata*), velvet bean (*Mucuna pruriens*), winged bean (*Psophocarpus tetragonolobus*), lima bean (*Phaseolus limensis*), bambara groundnut (*Vigna subterranea*), moth bean (*Vigna aconitifolia var. pubescens*), winged bean (*Psophocarpus tetragonolobus var. max*), and green gram (*Vigna radiata var. radiata*), or any combination thereof.

In addition or alternatively, low protein pulse is preferred, such as pulse (or pulse powder) containing less than 20, 25, 30, 35, 40,45, 50, 55, 60, 65, 70, 75 wt.% protein relative to the total weight of the pulse (powder). Accordingly, the pulse may preferably be one or more chosen from kidney bean (*Phaseolus vulgaris*), pinto bean (*Phaseolus vulgaris*), lima bean (*Phaseolus limensis*), scarlet runner bean (*Phaseolus coccineus*), velvet bean (*Mucuna pruriens*), faba bean (*Vicia faba*), sword bean (*Canavalia gladiata*), jack bean (*Canavalia ensiformis*), adzuki bean (*Vigna angularis*), broad bean (*Vicia faba var. major*), snow pea (*Pisum sativum var. saccharatum*), mung bean (*Vigna radiata*), chickling vetch (*Lathyrussativus*), green gram (*Vigna radiata var. radiata*), navy bean (*Phaseolus vulgaris*), great northern bean (*Phaseolus vulgaris*), cannellini bean (*Phaseolus vulgaris*), red bean (*Phaseolus vulgaris*), rice bean (*Vigna umbellata*), winged bean (*Psophocarpus tetragonolobus*), moth bean (*Vigna aconitifolia*), velvet bean (*Mucuna pruriens var. utilis*), green pea (*Pisum sativum*), lima bean (*Phaseolus lunatus*), guar bean (*Cyamopsis tetragonoloba*), or any combination thereof.

Most preferably, the pulse is navy bean (*Phaseolus vulgaris var. vulgaris*) or white bean. In addition or alternatively, the pulse is preferably not soy bean. Preferably, the pulse is low in gluten, such as containing less than 5, 4, 3, 2, 1, 0.5, 0.1 wt.% gluten or the pulse is gluten free.

In view of the above, a pulse (powder) containing more than 20, 25, 30, 35, 40,45, 50, 55, 60, 65, 70, 75 wt.% starch (or carbohydrates) and/or less than 20, 19, 18, 17, 16, 15, 14, 13, 12, 11, 10, 9, 8, 7, 6, 5, 4, 3, 2, 1 wt.% fat and/or less than 20, 25, 30, 35, 40,45, 50, 55, 60, 65, 70, 75 wt.% protein, relative to the total weight of the pulse (powder), may be used. Accordingly, the pulse may be chosen from one or more of kidney bean (Phaseolus vulgaris), lima bean (Phaseolus lunatus), scarlet runner bean (Phaseolus coccineus), sword bean (Canavalia gladiata), jack bean (Canavalia ensiformis), adzuki bean (Vigna angularis), broad bean (Vicia faba var. major), cannellini bean (Phaseolus vulgaris), mung bean (Vigna radiata), navy bean (Phaseolus vulgaris), great northern bean (Phaseolus vulgaris), red bean (Phaseolus vulgaris), rice bean (Vigna umbellata), winged bean (Psophocarpus tetragonolobus), moth bean (Vigna aconitifolia), velvet bean (Mucuna pruriens). Preferably, a pulse (powder) containing between 0.1-5 wt.% fat, between 40-80 wt.% carbohydrates, between 10-30 wt.% protein, and between 2-15 wt.% fiber, relative to the total weight of the pulse (powder), may be used. However, it is foreseen that instead of pulse powder any type of food powder containing more than 20, 25, 30, 35, 40,45, 50, 55, 60, 65, 70, 75 wt.% starch and/or less than 20, 19, 18, 17, 16, 15, 14, 13, 12, 11, 10, 9, 8, 7, 6, 5, 4, 3, 2, 1 wt.% fat and/or less than 20, 25, 30, 35, 40,45, 50, 55, 60, 65, 70, 75 wt.% protein, relative to the total weight of the food powder, may be used. In addition or alternatively, any food powder containing more than 20, 25, 30, 35, 40,45, 50, 55, 60, 65, 70, 75 wt.% starch (or carbohydrates) and/or less than 20, 19, 18, 17, 16, 15, 14, 13, 12, 11, 10, 9, 8, 7, 6, 5, 4, 3, 2, 1 wt.% fat and/or less than 20, 25, 30, 35, 40,45, 50, 55, 60, 65, 70, 75 wt.% protein, relative to the total weight of the food powder, may be used instead of the pulse powder as disclosed herein, for example (cereal) flour or (grain) flour such as rice flour.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one". Weigh as referred to herein may refer to weigh as-is or dry weight (e.g. oven dried at 50 degrees for 6 hours).

The following Examples illustrate the different embodiments of the invention

### Experimental section

### Example 1

### Preparation of marzipan substitute (1)

Marzipan substitute premix is prepared by mixing powdered sugar and bean powder in a Nauta^{®} mixer. The skilled person will be aware that any powder blending technology may be used instead. Water is added to form the marzipan substitute. Where mentioned, powders are pre-gelled, i.e. heated to 80-130 degrees Celsius to obtain pre-gelled pulse powder.

### RVA measurement

| | |
|---|---|
| 1. | Scales |
| 2. | Rapid Visco Analyser (RVA) cup with agitator |
| 3. | RVA meter |
| 4. | Demineralized water |

Measurement for 4 grams of sample. Fill cup with 25 grams of demineralized water. Add ingredient to water and mix gently with agitator. Place a cup with agitator in the machine and press it down as soon as the program indicates it. Measurement is carried out (20 minutes). Remove cup from under the machine and clean it.

### Texture analysis

| | |
|---|---|
| 1. | Scales |
| 2. | Hobart with mixing bowl and beater |
| 3. | Brookfield CT3 Texture analyzer. |
| 4. | Probe TA29 metal pointed |
| 5. | Probe TA10 plastic cylinder 12.7 round bottom |
| 6. | Smooth round cylinder cutter 11 cm diameter |
| 7. | Metal cup diameter above 7 cm |

Weigh and mix the dry raw materials of recipe. Mix into the powder while stirring. In a new mixing bowl, weigh 12% water and add powder on top of the water. Mix entirely with beater to form a paste. Put the mass in a cup and measure in 3 folds with the Texture Analyzer meter and Probe TA29 (metal pointed) with 15 mm penetration depth (compression) speed 2 mm/s.

Roll out marzipan in the following steps: 22, 15, 10, 5, 3, 2 mm. Cut out 3 round slices with the cutter and place slice over cup. Measure with the TA and probe TA10 until rupture. Rupture speed 0.5 mm/s.

| | Consistency/ firmness | Cohesiveness | elasticity | colour | beany flavour | stickiness |
|---|---|---|---|---|---|---|
| Ground almonds (real marzipan) fresh | = | = | = | Off white | non | - |
| Ground almonds (real marzipan) 1 week old | + | + | + | Off white | non | - |
| Dehulled soy beans boiled in water and ground | - | - | - | Off white | moderate | - |
| White beans boiled in water and ground | - | - | - | White | moderate | - |
| Soybean powder | - | = | -- | Off white | strong | - |
| Lentil powder | - | -- | -- | Off white | strong | +/- |
| Red bean powder | - | -- | -- | Off white | strong | +/- |
| Rice flour powder | + | -- | -- | white | strong | - |
| White bean powder | -- | -- | - | white | strong | +/- |
| Pre-gelled soybean powder (>10 wt.% fat, >20 wt.% starch) | = | +/- | +/- | Yellow | slight | +/- |
| Pre-gelled white bean powder (<10 wt.% fat, >30 wt.% starch) | + | + | + | Off white | slight | + |
| Pre-gelled lentil powder (<10 wt.% fat, >30 wt.% starch) | = | + | + | Off white | slight | + |
| Pre-gelled red bean powder (<10 wt.% fat, >30 wt.% starch) | = | + | + | Off white | slight | + |
| Pre-gelled rice flour powder (<10 wt.% fat, >30 wt.% starch) | + + | - | - | white | slight | + /- |

### Preparation of marzipan substitute (2)

The above marzipan substitute premix was prepared with pre-gelled white bean powder, to which different types of hydrocolloids were added. Best results were obtained with xanthan gum.

| | Consistency/ firmness | cohesiveness | elasticity |
|---|---|---|---|
| Pre-gelled white bean powder | + | + | + |
| Pre gelled White bean powder + CMC | + | + | +/- |
| Pre gelled White bean powder + Alginate | + | ++ | + |
| Pre gelled White bean powder + Xanthan gum | ++ | ++ | +++ |
| Pre gelled White bean powder + Citrus fibe | + | ++ | - |

### Preparation of marzipan substitute (3)

The following recipe was used to prepare marzipan substitute premix:

| Description | | Weight (g) | Weight percentage (%) |
|---|---|---|---|
| Marzipan substitute premix | | 500,00 | 100,00 |
| | - powdered sugar | 350,00 | 70,00 |
| | - Almond aroma 111017 | 0,40 | 0,08 |
| | - Potato starch Eliane BC 160 | 15,00 | 3,00 |
| | - White bean powder TT toasted | 76,70 | 15,34 |
| | - Emulsifier Myvatex Mighty Soft XL K | 2,50 | 0,50 |
| | - Salt | 0,40 | 0,08 |
| | - Xanthaan Gum type FF | 5,00 | 1,00 |
| | - Rape seed oil | 50,00 | 10,00 |
| | | | |

Almond aroma, potato starch, emulsifier, salt, xanthan gum, and rape seed oil are optional ingredients.

All dry raw materials, i.e. powdered sugar, potato starch Eliane, white bean powder toasted (pre-gelled), emulsifier, salt, and xanthan gum are mixed in a Nautamixer for 900 seconds. During the mixing, the oil and almond aroma are added to the powder by means of a pressurized vessel through a spray nozzle. Subsequently, the mixture can be packed. The mixture can be mixed with water according to the needs of the application (e.g. 9 to 13 wt.% water relative to end product) and/or coloring/flavoring agents may be added and mixed until a cohesive mass is obtained. The marzipan substitute can be used immediately. Leftovers can possibly be rolled out again after further processing, or be processed in a subsequent batch.

By supplying a mixture of dry ingredients (premix) instead of a ready-made marzipan substitute, the used always has access to fresh and possibly allergen-free marzipan with a constant quality and good processing properties. It also allows easier mixing of colorants and/or flavor. More favorable in transportation and can also be made as a concentrate without sugar.

### Example 2

### Preparation of marzipan substitute (1)

Marzipan substitute premix is prepared by mixing powdered sugar and different types of pre-gelled bean/pulse powder in a Nauta^{®} mixer. Water is added to form the marzipan substitute. Powders are pre-gelled by haeting to 80-130 degrees Celsius to obtain pre-gelled pulse/bean powder.

### RVA measurement

| | |
|---|---|
| 5. | Scales |
| 6. | Rapid Visco Analyser (RVA) cup with agitator |
| 7. | RVA meter |
| 8. | Demineralized water |

Measurement for 4 grams of sample. Fill cup with 25 grams of demineralized water. Add ingredient to water and mix gently with agitator. Place a cup with agitator in the machine and press it down as soon as the program indicates it. Measurement is carried out (20 minutes). Remove cup from under the machine and clean it.

### Texture analysis

| | |
|---|---|
| 8. | Scales |
| 9. | Hobart with mixing bowl and beater |
| 10. | Brookfield CT3 Texture analyzer. |
| 11. | Probe TA29 metal pointed |
| 12. | Probe TA10 plastic cylinder 12.7 round bottom |
| 13. | Smooth round cylinder cutter 11 cm diameter |
| 14. | Metal cup diameter above 7 cm |

Weigh and mix the dry raw materials of recipe. Mix into the powder while stirring. In a new mixing bowl, weigh 12% water and add powder on top of the water. Mix entirely with beater to form a paste. Put the mass in a cup and measure in 3 folds with the Texture Analyzer meter and Probe TA29 (metal pointed) with 15 mm penetration depth (compression) speed 2 mm/s. Roll out marzipan in the following steps: 22, 15, 10, 5, 3, 2 mm. Cut out 3 round slices with the cutter and place slice over cup. Measure with the TA and probe TA10 until rupture. Rupture speed 0.5 mm/s.

| | Consistency/ firmness | Cohesiveness | elasticity | colour | Degree of masking marzipan taste | stickiness |
|---|---|---|---|---|---|---|
| Pre-gelled faba bean (broad bean) powder | +/ | +/- | - | Off white with brown spots | Moderate | - |
| Pre-gelled chickpea powder | -- | +/- | - | Yellow | Strong | - |
| Pre-gelled wheat powder | +/- | - | - | Yellow | slight | +/- |
| Pre-gelled soybean powder | = | +/- | +/- | Yellow | slight | +/- |
| Pre-gelled navy bean powder | + | + | + | Off white | Slight/ none | + |
| Pre-gelled adzuki bean powder | = | +/- | +/- | Yellow | strong | +/- |
| Pre-gelled cowpea powder | = | +/- | +/- | Yellow | Moderate | +/- |
| Pre-gelled green pea powder | +/- | - | +/- | Green | Moderate | +/- |
| Pre-gelled kidney bean powder | + | +/- | +/- | Red | Slight | +/- |
| Pre-gelled lima bean powder | +/- | - | +/- | yellow | slight | +/- |
| Pre-gelled peanut powder | - | +/- | +/- | yellow | Strong | - |
| Pre-gelled sesame powder | - | +/- | +/- | yellow | Strong | - |
| Pre-gelled sweet potato powder | - | - | - | yellow | Strong | - |
| Pre-gelled chestnut powder | - | - | - | yellow | Strong | - |

### Preparation of marzipan substitute (2)

Marzipan substitute premix was prepared with pre-gelled navy bean powder or pre-gelled faba bean, to which different types of hydrocolloids were added. Best results were obtained with xanthan gum or alginate, particularly xanthan gum.

| | Consistency/ firmness | cohesiveness | elasticity | Smooth surface (no cracks) |
|---|---|---|---|---|
| Pre-gelled navy bean powder | + | + | + | - |
| Pre gelled navy bean powder + carboxymethyl cellulose | + | + | +/- | +/- |
| Pre gelled navy bean powder + Alginate | + | ++ | + | + |
| Pre gelled navy bean powder + Xanthan gum | ++ | ++ | +++ | ++ |
| Pre gelled navy bean powder + linseed flour | - | + | - | - |
| Pre gelled navy bean powder + almond carbohydrates | - | - | - | - |
| Pre gelled navy bean powder + starch syrup | - | -- | -- | -- |
| Pre-gelled faba bean powder | +/ | +/- | - | - |
| Pre gelled faba bean powder + carboxymethyl cellulose | +/- | +/- | -- | - |
| Pre gelled faba bean powder + Alginate | +/- | + | - | +/- |
| Pre gelled faba bean powder + Xanthan gum | + | + | + | + |
| Pre gelled faba bean powder + linseed flour | -- | +/- | -- | - |
| Pre gelled faba bean powder + almond carbohydrates | -- | -- | -- | - |
| Pre gelled faba bean powder + starch syrup | -- | --- | --- | -- |

## Claims

1. Use of pre-gelled pulse powder for preparing marzipan substitute or premix therefor,
wherein the pre-gelled pulse powder is pulse powder that has been preheated to 80-150 degrees Celsius and/or pulse powder comprising at least 50, 75, 90 wt.% gelatinized starch relative to the total weight of starch in the pulse powder, and
wherein said marzipan substitute or premix therefor comprises the pre-gelled pulse powder, sweetening agent, hydrocolloid, optionally water, and one or more of almond aroma and apricot kernel.

2. Use of pre-gelled pulse powder for increasing consistency and/or cohesiveness of marzipan substitute relative to use of not-pre-gelled pulse powder, wherein the pre-gelled pulse powder is pulse powder that has been preheated to 80-150 degrees Celsius and/or pulse powder comprising at least 50, 75, 90 wt.% gelatinized starch relative to the total weight of starch in the pulse powder, and
wherein said marzipan substitute comprises the pre-gelled pulse powder, sweetening agent, hydrocolloid, water, and one or more of almond aroma and apricot kernel.

3. Use of pre-gelled pulse powder for increasing elasticity of marzipan substitute relative to use of not-pre-gelled pulse powder, wherein the pre-gelled pulse powder is pulse powder that has been preheated to 80-150 degrees Celsius and/or pulse powder comprising at least 50, 75, 90 wt.% gelatinized starch relative to the total weight of starch in the pulse powder, and wherein said marzipan substitute comprises the pre-gelled pulse powder, sweetening agent, hydrocolloid, water, and one or more of almond aroma and apricot kernel.

4. Use of pre-gelled pulse powder for reducing stickiness of marzipan substitute relative to use of not-pre-gelled pulse powder, wherein the pre-gelled pulse powder is pulse powder that has been preheated to 80-150 degrees Celsius and/or pulse powder comprising at least 50, 75, 90 wt.% gelatinized starch relative to the total weight of starch in the pulse powder, and wherein said marzipan substitute comprises the pre-gelled pulse powder, sweetening agent, hydrocolloid, water, and one or more of almond aroma and apricot kernel.

5. Use of pre-gelled pulse powder for reducing bitterness and/or beany flavour of marzipan substitute relative to use of not-pre-gelled pulse powder, wherein the pre-gelled pulse powder is pulse powder that has been preheated to 80-150 degrees Celsius and/or pulse powder comprising at least 50, 75, 90 wt.% gelatinized starch relative to the total weight of starch in the pulse powder, and
wherein said marzipan substitute comprises the pre-gelled pulse powder, sweetening agent, hydrocolloid, water, and one or more of almond aroma and apricot kernel.

6. Use according to any one of the previous claims, wherein the pre-gelled pulse powder has a fat content below 10 wt.% relative to total weight of the pre-gelled pulse powder.

7. Use according to any one of the previous claims, wherein
- the sweetening agent is powdered sugar;
- the pulse is one or more chosen from one or more of lentil *(Lens culinaris),* Chickpea (*Cicer arietinum*), Lima bean (*Phaseolus lunatus*), Navy bean (*Phaseolus vulgaris*), Kidney bean (*Phaseolus vulgaris*), Black bean (*Phaseolus vulgaris*), Pinto bean (*Phaseolus vulgaris*), Great northern bean (*Phaseolus vulgaris*), Red bean (*Phaseolus vulgaris*), Cannellini bean (*Phaseolus vulgaris*), Adzuki bean (*Vigna angularis*), Mung bean (*Vigna radiata*), Urad bean (*Vigna mungo*), Cowpea (*Vigna unguiculata*), Winged bean (*Psophocarpus tetragonolobus*), Moth bean (*Vigna aconitifolia*), Rice bean (*Vigna umbellata*), Scarlet runner bean (*Phaseolus coccineus*), Hyacinth bean (*Lablab purpureus*), Guar bean (*Cyamopsis tetragonoloba*), Chickling vetch (*Lathyrus sativus*), Bamboo bean (*Phyllostachys edulis*), Sword bean (*Canavalia gladiata*), Jack bean (*Canavalia ensiformis*), Horse gram (*Macrotyloma uniflorum*), Lablab bean (*Lablab niger*), Pigeon pea (*Cajanus cajan*), and Bambara groundnut (*Vigna subterranea*), or any combination thereof;
- the marzipan substitute or marzipan substitute premix comprises fatty acid, vegetable oil, glycerol, or a combination thereof;
and/or
- the marzipan substitute or marzipan substitute comprises one or more antioxidants.

8. Use according to any one of the previous claims, wherein the pre-gelled pulse powder is pre-gelled navy bean (*Phaseolus vulgaris var. vulgaris)* powder.

9. Use according to any one of the previous claims, wherein the hydrocolloid is chosen from alginate and xanthan gum, preferably the hydrocolloid is xanthan gum.

10. Marzipan substitute premix, comprising
- pre-gelled pulse powder, wherein the pre-gelled pulse powder is pulse powder that has been preheated to 80-150 degrees Celsius and/or pulse powder comprising at least 50, 75, 90 wt.% gelatinized starch relative to the total weight of starch in the pulse powder;
- hydrocolloid;
- sweetening agent; and
- one or more of almond aroma and apricot kernel.

11. Marzipan substitute premix according to claim 10, wherein the pre-gelled pulse powder has a fat content below 10 wt.% relative to total weight of the pre-gelled pulse powder.

12. Marzipan substitute premix according to any one of claims 10-11, wherein:
- the sweetening agent is powdered sugar;
- the pulse is chosen from one or more of lentil (*Lens culinaris*), Chickpea (*Cicer arietinum*)*,* Lima bean (*Phaseolus lunatus*), Navy bean (*Phaseolus vulgaris*), Kidney bean (*Phaseolus vulgaris*), Black bean (*Phaseolus vulgaris*), Pinto bean (*Phaseolus vulgaris*), Great northern bean (*Phaseolus vulgaris*), Red bean (*Phaseolus vulgaris*), Cannellini bean (*Phaseolus vulgaris*), Adzuki bean (*Vigna angularis*), Mung bean (*Vigna radiata*), Urad bean (*Vigna mungo*), Cowpea (*Vigna unguiculata*), Winged bean (*Psophocarpus tetragonolobus*), Moth bean (*Vigna aconitifolia*), Rice bean (*Vigna umbellata*), Scarlet runner bean (*Phaseolus coccineus*), Hyacinth bean (*Lablab purpureus*), Guar bean (*Cyamopsis tetragonoloba*), Chickling vetch (*Lathyrus sativus*), Bamboo bean (*Phyllostachys edulis*), Sword bean (*Canavalia gladiata*), Jack bean (*Canavalia ensiformis*), Horse gram (*Macrotyloma uniflorum*), Lablab bean (*Lablab niger*), Pigeon pea (*Cajanus cajan*), and Bambara groundnut (*Vigna subterranea*), or any combination thereof;
- the marzipan substitute premix comprises fatty acid, vegetable oil, glycerol, or a combination thereof;
and/or
- the marzipan substitute premix comprises one or more antioxidants.

13. Marzipan substitute premix according to any one of claims 10-12, wherein the marzipan substitute premix is in dry form and/or comprises at most 20, 15, 10, 5 wt.% water relative to the total weight of the marzipan substitute premix.

14. Marzipan substitute premix according to any one of claims 10-13, wherein the pre-gelled pulse powder is pre-gelled navy bean (*Phaseolus vulgaris var. vulgaris*) powder.

15. Marzipan substitute premix according to any one of claims 10-14, wherein the hydrocolloid is chosen from alginate and xanthan gum, preferably the hydrocolloid is xanthan gum.

16. Marzipan substitute premix according to any one of claims 10-15, comprising 10-90 wt.% pre-gelled pulse powder, and 1-90 wt.% sweetening agent, relative to the total weight of the marzipan substitute premix.

17. Marzipan substitute comprising:
- pre-gelled pulse powder, in an amount of 10-80 wt.% , wherein the pre-gelled pulse powder is pulse powder that has been preheated to 80-150 degrees Celsius and/or pulse powder comprising at least 50, 75, 90 wt.% gelatinized starch relative to the total weight of starch in the pulse powder;
- sweetening agent, preferably powdered sugar, in an amount of 20-80 wt.%;
- hydrocolloid, in an amount of 0.1-5 wt.%; and
- water, in an amount of 1-25 wt.%; and
- one or more of almond aroma and apricot kernel, in an amount of 0.01-1 wt.%,
all relative to the total weight of the marzipan substitute.

18. Marzipan substitute according to claim 17, wherein the pre-gelled pulse powder has a fat content below 10 wt.% relative to total weight of the pre-gelled pulse powder.

19. Marzipan substitute according to any one of claims 17-18, wherein:
- the sweetening agent is powdered sugar;
- the pulse is chosen from one or more of lentil (*Lens culinaris*), Chickpea (*Cicer arietinum*), Lima bean (*Phaseolus lunatus*), Navy bean (*Phaseolus vulgaris*), Kidney bean (*Phaseolus vulgaris*), Black bean (*Phaseolus vulgaris*), Pinto bean (*Phaseolus vulgaris*), Great northern bean (*Phaseolus vulgaris*), Red bean (*Phaseolus vulgaris*), Cannellini bean (*Phaseolus vulgaris*), Adzuki bean (*Vigna angularis*), Mung bean (*Vigna radiata*), Urad bean (*Vigna mungo*), Cowpea (*Vigna unguiculata*), Winged bean (*Psophocarpus tetragonolobus*), Moth bean (*Vigna aconitifolia*), Rice bean (*Vigna umbellata*), Scarlet runner bean (*Phaseolus coccineus*), Hyacinth bean (*Lablab purpureus*), Guar bean (*Cyamopsis tetragonoloba*), Chickling vetch (*Lathyrus sativus*), Bamboo bean (*Phyllostachys edulis*), Sword bean (*Canavalia gladiata*), Jack bean (*Canavalia ensiformis*), Horse gram (*Macrotyloma uniflorum*), Lablab bean (*Lablab niger*), Pigeon pea (*Cajanus cajan*), and Bambara groundnut (*Vigna subterranea*), or any combination thereof;
- the marzipan substitute comprises fatty acid, vegetable oil, glycerol, or a combination thereof;
and/or
- the marzipan substitute comprises one or more antioxidants.

20. Marzipan substitute according to any one of claims 17-19, wherein the pre-gelled pulse powder is pre-gelled navy bean (*Phaseolus vulgaris var. vulgaris*) powder.

21. Marzipan substitute according to any one of claims 17-20, wherein the hydrocolloid is chosen from alginate and xanthan gum, preferably the hydrocolloid is xanthan gum.

22. Method for obtaining a marzipan substitute according to any one of claims 17-21, comprising combining water and marzipan substitute premix as defined in any one of claims 12-16, and subsequent mixing.
